# EUROPEAN PATENT APPLICATION

(11) **EP 1 574 971 A1**
(43) Date of publication of application: **14.09.2005**
(21) Application number: 04290644.6
(22) Date of filing: 10.03.2004
(51) Int. Cl.: G06F 17/30, G06F 17/60

(54) **A method, a hypermedia browser, a network client, a network server, and a computer software product for providing joint navigation of hypermedia documents**

(71) Applicant: ALCATEL, 75008 Paris (FR)
(72) Inventor: Rössler, Horst, 70794 Filderstadt (DE); Szabo, Peter, Dr., 75180 Pforzheim (DE); Hoche, Michael Walter, Dr., 71701 Schwieberdingen (DE)
(74) Representative: Rausch, Gabriele

(57) **Abstract**

The present invention relates to a method for sharing a hypermedia document presentation in a browser context between at least two clients (C1, C2, C3), the method comprising the following steps of establishing a common presentation context (SV), exchanging continuously interaction events (IC1, IC2, IC3) between the clients within the common presentation context, and presenting the common presentation context, such that a client has its own replica of the shared presentation context within a browser and the method comprises the further steps of coordinating interaction events by resolving the interaction events according to preferences and emulating the coordinated interaction events in the replica of the shared presentation context at a client. The present invention relates further to a hypermedia browser, a network client, a network server, and a computer software product. This invention targets the problem of providing a multimedia collaboration and communication within a browser context by a hypermedia platform-independent communication providing a joint navigation metaphor.

## Description

The present invention relates to a method for sharing a hypermedia document presentation in a browser context. The present invention relates further to a hypermedia browser, a network client, a network server, and a computer software product.

Remote multi-user interaction in a collaborative environment is a current topic in distributed computing and telecommunication. The application area ranges from games to tele-laboratories to tele-commerce and others. Teleconferencing and video-conferencing support one part of the collaborative process, that of bringing people together. Yet most real meetings require not only the people, but also the materials and on-going work participants wish to share with others. These include notes and documents as well as some common work surface that allows each person to annotate, draw, record and convey ideas during the meeting's progress. Such a common work surface is a hypermedia (web) browser, like the Navigator from Netscape or the Internet Explorer from Microsoft.

Collaborative interactions fall in a range from asynchronous, where the points of interaction are separated by relatively long periods of time, to synchronous, where the interactions are simultaneous or separated by short periods of time.

Systems that support real-time sharing of interaction recognize the existence of each participant and his or her niche in the collaboration. The most effective way of accomplishing this is to develop special-purpose applications designed for simultaneous use by multiple users.

There are collaboration-aware applications, such as whiteboards and text editors, e.g. Instant Messenger from Netscape.

An example of collaborative awareness system is GroupKit, see http://www.groupkit.org/. It and its applications run on Unix workstations under the X11 environment, a distributed window system. It supports real time distributed multi-point conferences between many users together with building of text or graphics.

An alternative approach is sharing a single-user application between participants of an online meeting through a shared screen or shared window. Each participant would have an identical view of the running application and an opportunity to interact with it, but the application itself would have no awareness that more than one person was using it.

This kind of systems provide the shared use of existing single-user applications through mechanisms that are unknown, or transparent, to the application. Collaboration transparency systems can be used to collaborate in legacy applications that were developed with no support of collaboration. In contemporary window-based environments this requirement has led to the development of shared window systems.

There is pertinent literature in this field, like United States Patent No. US 6,691,153 B1 disclosing a method and system that can be used to support a process interaction among a group of participants connected to a network. A participant completes an electronic form specifying the subject matter of the process interaction and a list of network addresses corresponding to other participants in the interaction. A server receives the form and includes resources for delivering an electronic mail message associated with an electronic medium associated with the interaction. When the participant opens the message, the electronic medium is produced by the server that includes static and dynamic regions. The participant can add comments on the interaction or direct the process interaction using an interaction region. The dynamic regions are asynchronously updated in the server and indicate the current content of the electronic medium that can be accessed by other participants.

This invention targets the problem of providing a multimedia collaboration and communication within a browser context by a hypermedia platform-independent communication providing a joint navigation metaphor.

Such a system and method for managing interactions between users in a browser-based telecommunications network is disclosed by United States Patent No. US 6,144,991. There, a software system allows a guide to interact with a client on a real-time, interactive basis over the World Wide Web. The methodology includes configuring a guide system with a special-purpose browser displaying both locally displayable frames and remotely displayable frames; the client system utilizes a conventional browser. The remotely displayable frames are transmitted to the client so that both the guide and the client have identical views of the remotely displayable frames. The guide uses the locally displayable frames to call upon available Web resources, typically in response to a client request also transmitted over the Web via, for example, a chat program, and then the guide can load the remotely displayable frames for rendering by the conventional browser.

The guide and client can interact with a shared pointer. A plug-in as client-side component leads to added functionality. This functionality includes frame size synchronization, client link notification, and telepointer.

The frame size synchronization involves the determination of client browser size and position. The visual appearance of most Web pages depends upon the window size of the browser rendering it. The exact appearance of a client browser needs to be synchronized. Client link navigation notification includes client-initiated navigation, denial of client-initiated navigation, and forwarding of client-initiated page changes to the guide.

This guide can create a telepointer that is designed to allow parts of Web pages to be highlighted by any user of the session. Typically for this feature to be useful, it is necessary for the browser in remotely displayable frame and client browser to be the same window size or the pages should comply with strong formatting information, which limits the presentation layout and enables Web pages to look the same on any browser.

The problem of providing a real joint navigation metaphor is overcome by a method for sharing a hypermedia document presentation in a browser context between at least two clients, the method comprising the steps of establishing a common presentation context, exchanging continuously interaction events between the clients within the common presentation context, and presenting the common presentation context, where a client has its own replica of the shared presentation context within a browser, and the method comprises the further steps of coordinating interaction events by resolving the interaction events according to preferences and emulating the coordinated interaction events in the replica of the shared presentation context at a client. The common presentation context might comprise a shared pointer on the shared presentation context such that the shared pointer is controlled by the designation means of a determined client and thus providing a joint navigation metaphor.

The problem is solved inter alia by a hypermedia browser comprising an extension that is adapted to establish a common presentation context with at least a second browser by exchanging continuously interaction events within the common presentation context, and presenting the common presentation context, where the hypermedia browser has storage means for its own replica of the shared presentation context and the extension is adapted to coordinate interaction events by resolving the interaction events according to preferences and emulating the coordinated interaction events in the replica of the shared presentation context.

And the problem is solved by a network client comprising such a hypermedia browser.

The problem is solved inter alia by a network server comprising distributing means for exchanging messages, presence, and other structured information in close to real time between entities between clients for a common presentation context where a client has its own replica of a shared presentation context within a browser and the distributing means are adapted to exchange and coordinate interaction events between the clients by resolving the interaction events according to preferences.

And the problem is solved by a corresponding computer software product.

In other words, in contrast to a common generated presentation for a hypermedia document at a server and/or a display of a common identical presentation view at a client (of multiple clients) by exchanging at least parts of the hypermedia document it is suggested to synchronize the presentation by exchanging interaction events like mouse movements, key strokes, clicks etc. influencing a document (replica) presentation instead of communicating the modified presentation or the identical view.

Accordingly, it is an object and advantage of the present invention to enhance the Internet navigation metaphor by integrating a joint navigation metaphor. The added usage metaphor will improve collaboration and enables multiple applications, e.g. home working, distributed working, conferencing etc.

Another advantage of the present invention is that the invention easily embeds into the current Internet browser infra structure using plug-in technology or ubiquitous abstract machines like the Java virtual machine.

A further advantage of the present invention is that the telecommunication is enriched by gesturing with context adaptation, thus adding a new dimension of information interchange that will support all the future coming Web centric services and applications.

Yet another advantage of the present invention is that the deployment path using plug-in is proven to be very efficient.

It is suggested to integrate gesture (designation) modality and stroke modality as an ergonomic communication metaphor (user interface) into a collaborative hypermedia communication environment, i.e. a browser, in such a way that each user's presentation context, designation, control and interaction capability remains.

A browser enhancement is adapted to provide a shared pointer. The browser might be enhanced by e.g. an applet or a plug-in that embeds an interaction event reporting functionality. Every time the user interacts with the browsers context, i.e. types a character, pushes a mouse button or moves the mouse, an event occurs. For instance mouse events, in general designation device interactions, in the browser's context are grabbed continuously at a client. An entity can be notified of such an event. All it has to do is implement the appropriate interface and be registered as e.g. an event listener on the appropriate event source. The events might be transmitted to a server. There the events are synchronized, aggregated, and interpreted in order to provide a shared hypermedia document presentation within the browser. The events are synchronized e.g. for instructing or directing the shared pointer and its client interaction. The server could be distributed and/or located at a client, even integrated within the plug-in mentioned before.

The browser will evolve from a simple (passive) hypermedia consumer tool to an interactive communication tool. The mediating server is optional, the mediation, i.e. the coordination of concurrent interaction might be resolved locally at the browser or the client.

An interaction event stream allows to exchange interactions continuously between the browsers, i.e. their presentation interactions, within a shared context, i.e. the presentation source. At the server, the transient information, i.e. the events, are interpreted as stimulus for e.g. an editing sequence in case of filling a form or a gesture in case of a moving pointer.

These and many other objects and advantages of the present invention will become apparent to those of ordinary skill in the art from a consideration of the drawings and ensuing description, where
Figure 1 shows network clients and a hypermedia browser according to the invention.
Figure 2 shows an additional network server according to the invention.
Figure 3 shows a coordination of events according to the method according to the invention.
Figure 4 shows differing presentation layouts by different hypermedia browsers according to the invention.
Figure 5, 6, and 7 shows ambiguous rendering effects in a hypermedia browser according to the invention.
Figure 8 shows the architecture of a network comprising a network client and a network server according to the invention.

Like a usual web browser the hypermedia browser according to the invention fetches and displays Hypertext Mark-up Language denoted multimedia documents. However, several geographically separated users can enter a session via a session manager. Each participant runs his or her own browser and a browser window becomes a shared visual navigable space.

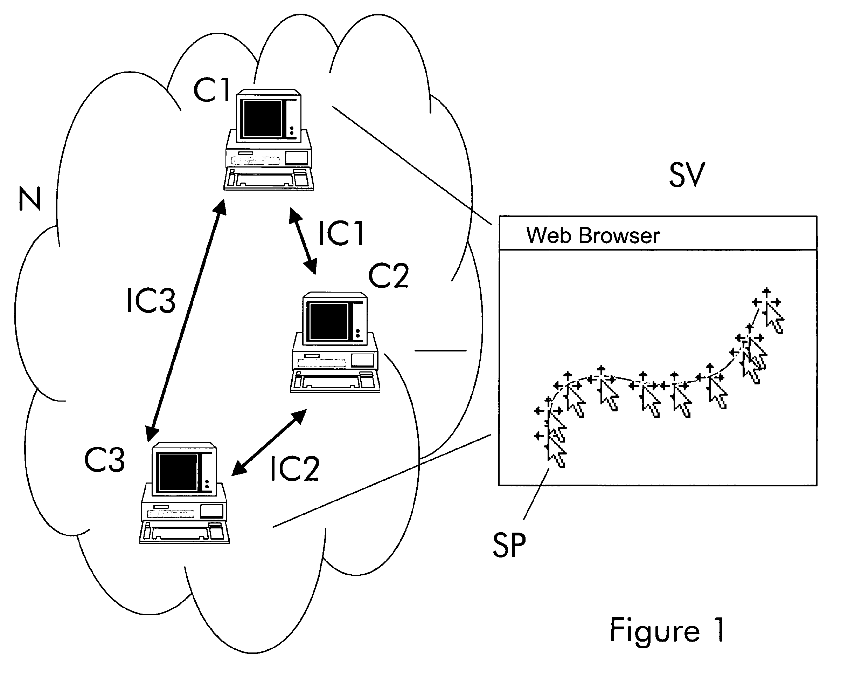

Figure 1 shows three clients C1, C2, and C3, each running a hypermedia browser according to the invention. The clients C1, C2, and C3 are interconnected through a network N and said network also provides the content, i.e. a hypermedia document, that could be loaded in a hypermedia browser, e.g. from a web server. The clients C1, C2, and C3 intercommunicate via the communication paths IC1, IC2, and IC3 interaction events. Each hypermedia browser renders a presentation of the shared hypermedia document in its context. Thus the three hypermedia browsers provide a shared view SV of the document. An interaction might be a designation, e.g. a mouse movement at a client, presented as a movement of a shared pointer SP.

Pointers refer to an object on the screen that can be manipulated with a mouse or other pointing or designation device. Usually pointers and cursors are tightly coupled. The cursor is there to let you know where information will be displayed when you type on a keyboard. You can use the pointer to place the cursor. Shared pointers are pointers that are visible in remote viewpoints at remote user interfaces and also manageable from there.

Whenever a hyperlink is selected it is guaranteed that all the browsers in the session navigate to that page automatically by instructing all its replicas to fetch the new resource. Conflicting actions that might happen are resolved by either local preferences or by a coordination protocol between the hypermedia browsers.

The user may not see exactly the same thing although each person wishes to view about the same content. Thus preferences might specify whether the presentation of the hypermedia document should be rendered in an identical or similar view.

An aspect might be scaling and resizing. Scrolling could be preferred as following strictly (emulation of scroll events), following dynamically (scrolling when a shared pointer leaves a pane) or statically (no automatic scrolling when optionally indicating the viewport of a remote user e.g. by additional scroll bars). A further aspect might cover restricting or granting access to browser interaction elements like a print page button or the reload button. Another aspect might affect the appearance preferences and the presentation preferences of multimedia objects.

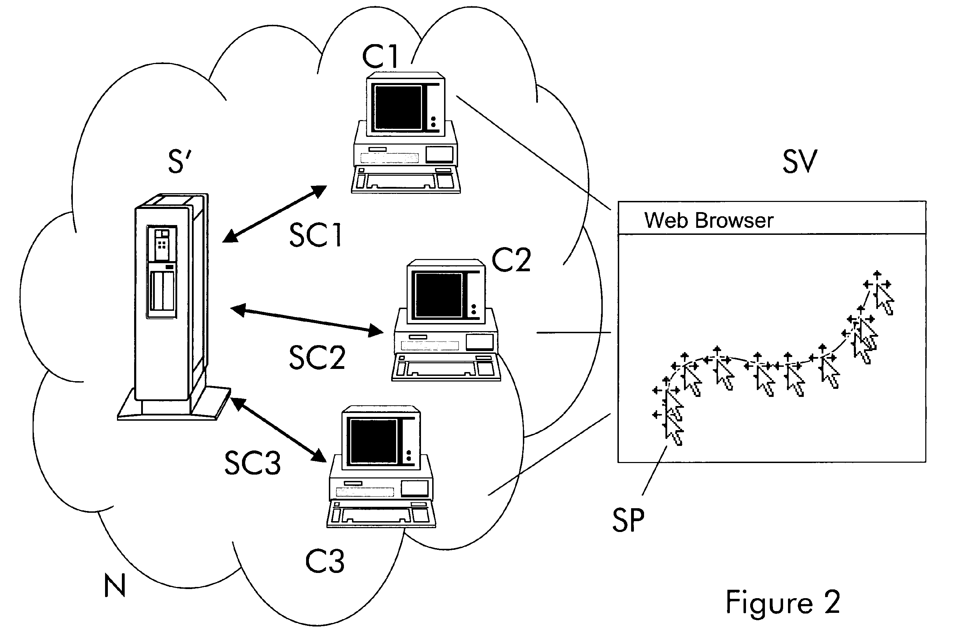

Figure 2 shows a network server S. The clients C1, C2, and C3 communicate with a server S' via communication paths SC1, SC2, and SC3. These communication paths enable the exchange of interaction event messaging or session management. An available network server might be Jabber providing a set of streaming eXtended Markup Language protocols and technologies that enable any two entities on the Internet to exchange messages, presence, and other structured information in close to real time, http://www.jabber.org/.

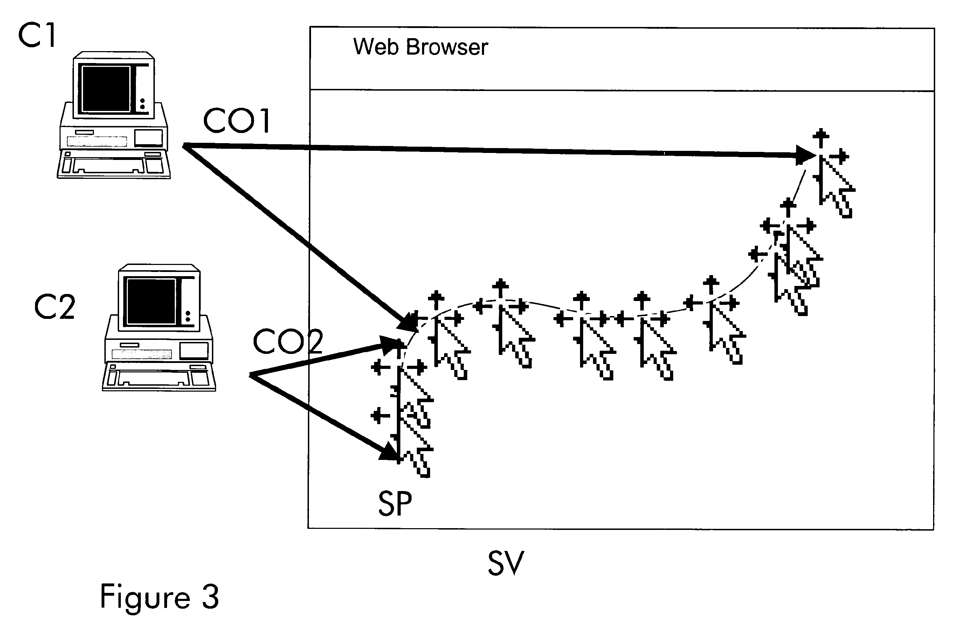

Concurrent interaction events have to be resolved. A handover of a shared pointer from a first client C1 to a second client C2 is shown in figure 3. A first interval of a trajectory of a shared pointer SP reflects interaction events of the user of the first client, e.g. mouse movement. After that the second client C2 receives control and this client's interaction events instructs the shared pointer.

The handover procedure could be initiated by certain gestures, e.g. the movement of a clients pointer (designator) in the browser window or a predefined gesture. When a conflict arises orderings of the clients like the attendance duration or the client's amount of interaction could resolve the conflict smoothly. The most drastic action would be a forced negotiation between the users supported by a communication pop-up for the conflicting parties. A very simple and effective handover indication mechanism is for instance the degree of indicated motion, i.e. the speed of the designation device, in combination with the interaction duration. Then, a fast intervening user could capture shared pointer control smoothly.

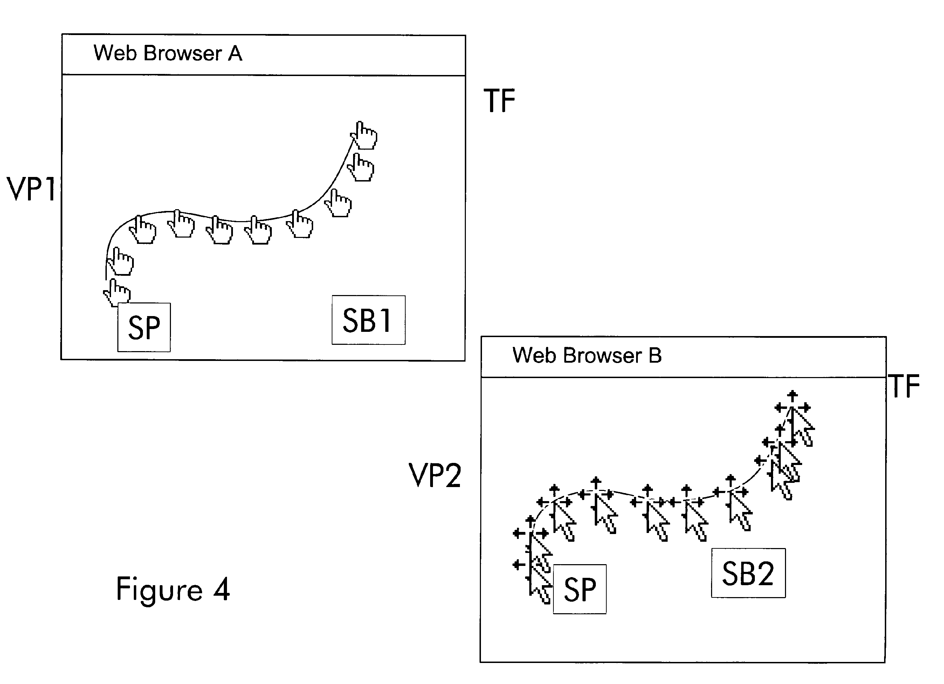

The pointer provides the gesture metaphor and the navigation metaphor in combination. This requires that the trajectories of a shared pointer be synchronized even on different browsers as shown in figure 4. The requirements for the trajectory of the shared pointer SP are that both metaphors are presented with respect to the intended semantics which is in this case the relative position (since the content rendering is identical below the shared pointer SP). The viewports are not identical. The left hand browser's viewport VP1 has two scroll bars SB1 because the left hand menu's rendering width is larger than the scroll bar SB2 in the viewport VP2 of the right hand browser shown. The rendering of the top frame TF differs drastically. Therefore the coordination of the interaction events and the interpretation of the interaction events for shared interaction like joint navigation are not straightforward.

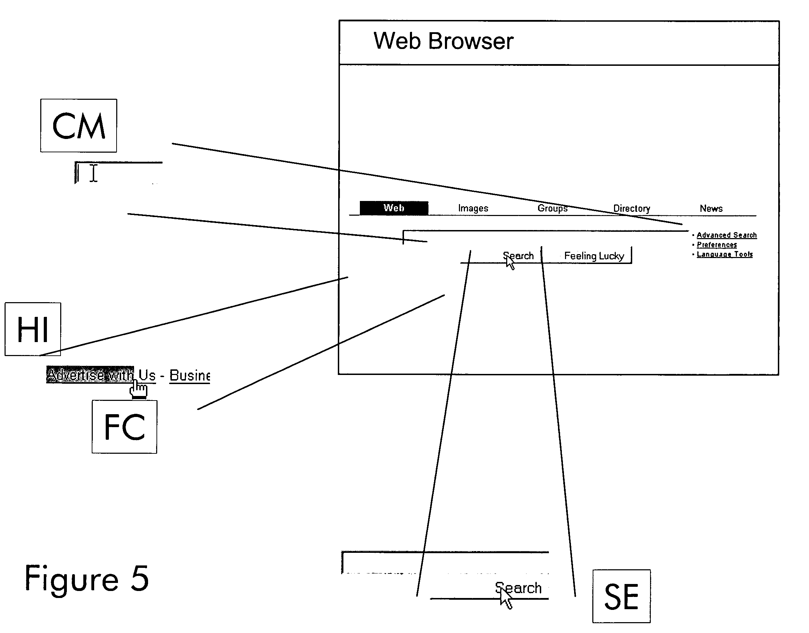

Obviously there are multiple interaction forms a shared pointer has to cope with. Figure 5 shows a set of examples, namely a button selection SE, highlighting Hl of a text, a face change FC over a hyperlink, and a cursor mode CM for filling out a form.

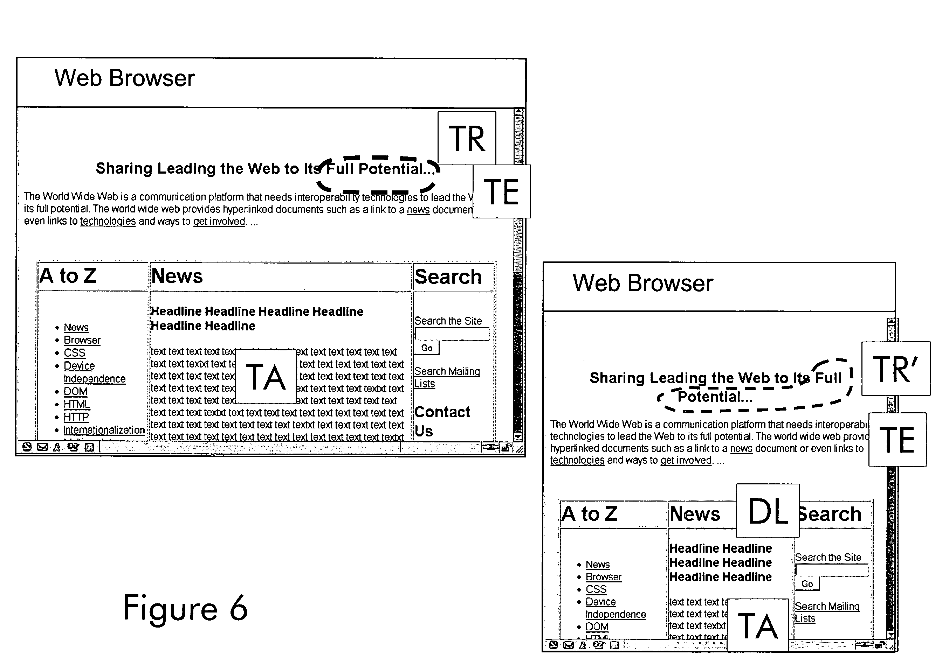

Figure 6 shows the pathological case where the same resource is rendered differently to different views dependent on the sizing of the viewport. This causes the problem between textual reference and position. The test TE in the right hand side browser has 4 lines. The same text TE has in the left hand side browser is formatted using 3 lines. Similarly the table TA is sized and the cell texts are formatted accordingly.

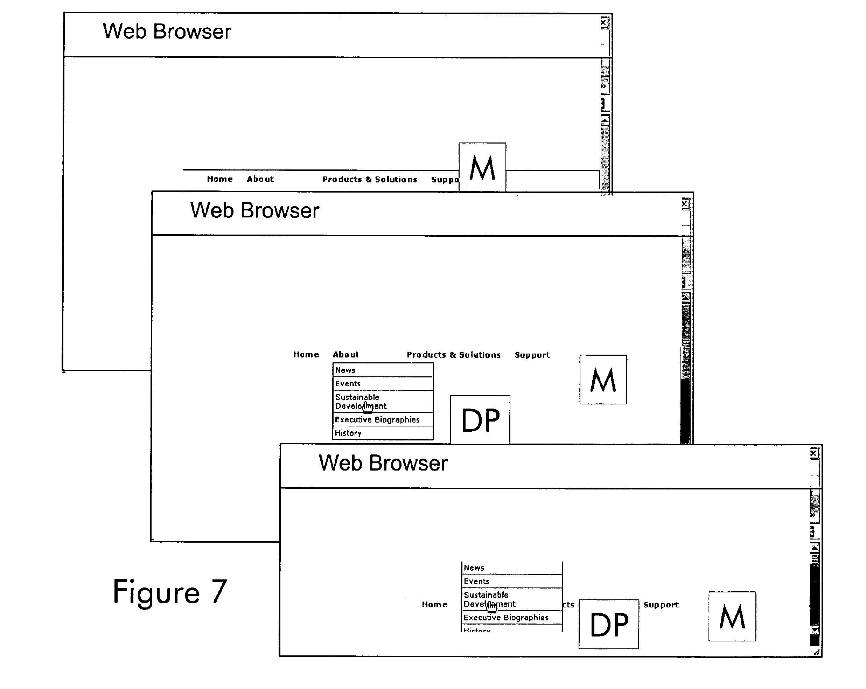

Figure 7 shows the pathological case where the same resource is rendered differently to different views dependent on the history of a pointer. When the pointer moves over the area "About" in the menu M an additional menu bar DP rises, and remains even when the pointer is moved elsewhere outside the menu M. This means that two non synchronous viewports might even not provide the same navigational directions, as it is the case for all mutable hyperlink objects like collapsible menus.

These examples will be used to illustrate an advantageous coordination mechanism. In gestural communication as in joint navigation there seems to be no consistent notion of a coordinate space for a pointer.

A telepointer implementation in Java is available, namely the public class "Telepointer" which extends "JComponent" and implements "Serializable" and "Observer" in the Java package "edu.vatech.cs.ui". The public repaint method repaints a specified rectangle of a component within a defined timeframe. This method causes a call to this component's update method. The telepointer and the object underneath have to interact.

Within an object of the multimedia or hypermedia document one might represent exact shared pointer positions and motions made over one view to its counterpart on other viewports. The simple solution is to move a cursor to an object's area or center. However, this removes the dynamics of a gestural stroke at all when the granularity is not fine like a pixel 'objects' within a shared window. Beside that usually common users are irritated or even confused by multiple (tele)pointers.

Furthermore, gestures are often difficult to see and interpret because of disruptions to their motion caused by network jitter. One way to improve the visibility of remote gestures is by using traces-visualizations of the last few moments of a remote pointer's motion. In order to provide a smooth motion of a pointer it is advantageous to approximate the pointer trajectory by a continuous graph rather than only to emulate a single interaction event. For the local designation it is preferable to preserve the designation (hand) - pointer (eye) coordination.

Another solution is to translate the motion over one object into a stylized motion over its counterpart. Gesture recognition can further identify stroke styles, so that the meaning of the stroke can be captured and displayed appropriately.

With differing representations, several objects may be collapsed into a cluster, or removed from the view altogether, as shown in figure 5. While it may be reasonable to tie cursor motion to its collapsed counterpart, this could lead to possible confusion between participants. Associated communication modalities, e.g. a user's verbal talk may not match the views being pointed to.

Therefore conventional groupware provides participants with limiting strict "what you see is what I see" (WYSIWIS) views, where participants see exactly the same thing across their displays.

For joint navigation within a browser the strict view needs to be relaxed. A user can have different viewports onto one and the same multimedia document. The presented multimedia document objects can be formatted differently across participating browsers. And objects can have even differing representations.

Shared pointers are mapped to the differing views by using knowledge of the underlying application semantics, i.e. the rendering and presentation of a media object by the browser.

The mapping is straight forward when views are identical, shared pointers are just mapped to the individual displays at their respective window coordinate positions. When relaxing by allowing the user to scroll independently, their viewports will differ and cursor locations must be positioned relative to the underlying work surface rather than to the window.

This mapping of shared pointers to the viewport could be realized by the following method. If pointers are in the window area, i.e. a root, position them using the coordinate system of the window area. If pointers are drawn on a separate independent area, map the relative area coordinates to the coordinate system of the window area by a linear transformation. If the pointer leaves the viewport or is already outside, alternate recovery strategies should take place, e.g. scrolling the area appropriately or indicating the imaginary cursor position.

Views might be formatted differently, i.e. objects that are otherwise identical appear in the views in different locations, as shown especially in figure 6. When windows have different sizes, the browser reformats the multimedia document objects to fit, such as in the shown floating text TE, tables TA etc. Shared pointers can still be implemented correctly by mapping their position to the underlying multimedia document objects, rather than a literal coordinate system.

The example of two presentations of the same document illustrates automatically reformatted displays. Users can e.g. resize their windows independently, and the underlying text is reformatted accordingly. The format might even be browser dependent. As a user moves a shared pointer over a word, e.g. "Potential" in the head line, its remote counterparts appear correctly on top of the same word "Potential" in the other browser, even though the word's actual positions in the windows differ radically (different lines, different format place).

To implement this, shared pointers are mapped to the multimedia objects, e.g. to primitive objects like characters or pictures, structuring objects like layers, regions, containers, or complex objects like tables, frames, windows, applets, etc. These objects are described in a mark-up languages like (Dynamic) Hyper Text Mark-up Language, eXtended Hyper Text Mark-up Language etc. comprising dedicated tags for each object, hence describing the composition of multimedia objects, the layout, and specifying the rendering for presentation. The browser is capable of rendering a syntactical presentation of the objects in the mark-up language into a presentation of an (interactive) view.

As a user moves a shared pointer, the underlying object(s) and its position are discovered. That position as well as the shared pointer coordinates relative to the object origin are transmitted, causing remote shared pointers to appear over the corresponding object. This approach even covers the above mentioned problem to handle viewport differences between views, since modifiable views like scrollbar areas correspond to an object having its own coordinate system.

In the differing views, shared pointers should appear correctly even at different locations but on the semantically correct relative position in a relative coordinate system. In general there is a (sometimes not so linear) transformation between the views coordinate system that depends on the scale of the views and the positioning of the view.

Differing view presentations suffer similar usability problems as differing viewports, as well as several new ones. Especially empty and interstitial space is problematic because of the lack of an (immediate) reference.

When a shared pointer moves into an blank area that is e.g. unoccupied by an underlying object, i.e. free space, it is open how the shared pointer should be presented on other views. Although there exists the coordinate space of the surrounding object, e.g. a pane or the background, i.e. the root object, the spatial relations of objects are suspect and even misleading.

A straightforward but disadvantageous approach is to draw the shared pointer relative to the last object passed over rather than the background. Because shared pointers have to support gesturing it should be considered how a gestural stroke, i.e. the temporal movement of a pointer, appears across displays with different formats.

For example, consider the differing formats shown in figure 6. When the first user circles the phrase "Full Potential" (head line tail), this gesture is drawn discontinuously on the right hand view, because the text is formatted onto different lines as indicated by the two different traces TR and TR'. The meaning of these gesture strokes should be preserved. Similarly, discontinuities between objects cause gesture movement to be jumpy. A smooth movement from one object to another on one user's view can appear as abrupt jumps on the other display when the objects are in quite different positions relative to each other.

A way out of this dilemma is to approximate the surrounding objects and to smoothen the movements (trajectory), i.e. the trace, of a shared pointer in the different remote views for unoccupied areas with continuous curves like low degree polynomial, e.g. a Bézier spline, using for instance the least minimum square method.

A further problem are differing presentations of the same object. For example, consider a pictorial hierarchy of a menu that has an expandable dynamic positioning sub-menu DP of items that might be partially collapsed as shown in figure 7. As with differing formats, shared pointer positions can be approximated by attaching them to objects.

Therefore the mapping might have a further level of indirection. The shared pointer has to discover the view (presentation) underneath, the objects state, and what alternate (remote) views exist. The shared pointer position can then be translated to those other representations. In most situations the resolution is unambiguous, but as a fall back position the telepointer could enforce a (smooth) synchronization of the object underneath by simulating the corresponding browser interaction.

Gesturing is a natural means of communication for humans. Hand gestures, in particular, are often used to express ideas, to refer to objects, to attract attention or to signal turn taking. To recreate this communication metaphor over distance the above mapping for remote object synchronization illustrated on a shared pointer provides a relaxed common hypermedia presentation view with common interaction elements (also objects) like the shared pointer.

Standard telepointer usually lack semantic information: they have a fixed size and always point in the same direction. The pointer is moved by a pointing or designation device, such as a mouse, a tablet, or a touchpad.
A shared whiteboard allows two or more people to view and draw on a shared drawing surface even when they're at a distance. Typical shared whiteboards are designed for informal conversation, but they may also serve structured communications or more sophisticated drawing tasks, such as collaborative graphic design, publishing, or engineering applications. Shared whiteboards may indicate where each person is drawing or pointing by showing telepointers, which are e.g. color-coded or labeled to identify each person.

A further aspect is that such solutions are not everywhere available and require complex installation of additional software, and often there are limiting networking constraints like access server configurations, DHCP, firewalls, used sockets, etc.

Preferably, a standard interaction event protocol like Extensible Messaging and Presence Protocol is used that allows to exchange interactions continuously, e.g. the above mentioned Jabber protocol suite. Concerning efficiency and quality of service when the event stream becomes interrupted due to lack of service quality, interpolation, extrapolation, or approximation at the receiver might be applicable. For instance interaction events originated by a keyboard, i.e. entered characters, could be smoothly buffered. Mouse events could be simply approximated by e.g. splines.

At a coordinating instance , e.g. a server, the transient information, i.e. the interaction events, is coordinated in order to resolve concurrent actions. Then the resolved interaction stream is interpreted client specific and rendered to a viewport of the hypermedia document, e.g. by an enhanced browser. The coordinating instance might be distributed and/or located at the client side.

Shared pointer control requires a handover from one party to another. It is suggested to control the handover via additional modalities or dedicated gestures or metaphors. The lead modality (usually speech) could for instance be used to identify the user that controls a shared pointer. Another conflict resolution is to use the drag and drop metaphor for request of a shared pointer control, i.e. the shared pointer could be dragged by a user. While dragging the pointer resource is not available for the non-dragging parties. Another solution might be the mean movement or mean positioning approach, i.e. the user with the fastest (strongest) mouse movement determines the position of the shared pointer. Another (more confusing) approach is multiple (labeled) pointers and views.

The shared pointer could be enriched as a logical cursor, which is an object composed of a pointer i.e. a mouse symbol, e.g. an arrow, cross, etc. a blinker, that is a graphical presentation of the extent of the object touched by the pointer. E.g. the blinker of a paragraph in a structured text is a closed orthogonal polygon, and a comment, that is a means of self-explanation, e.g. a small rectangular area with text or a short audio sequence, etc. beside further attributes. A logical cursor must have at least a pointer. Blinker and/or comment are useful for complex objects. Because each visually presentable object has a logical cursor implementing object perception, this ability could be used for the realization of an object sensitive logical shared cursor. The logical shared cursor provides exact identification of objects in the shared document at the granularity of object identification. I.e. complex objects allow manipulation on different abstraction levels. Granularity represents interaction on these levels. For example changing the granularity in text editing from interacting with characters and words to interacting with paragraphs. The enhanced context explanation might be interesting for future hypermedia documents enabling to communicate structural information and a shared logical cursor supports the common understanding of some details of the document under discussion.

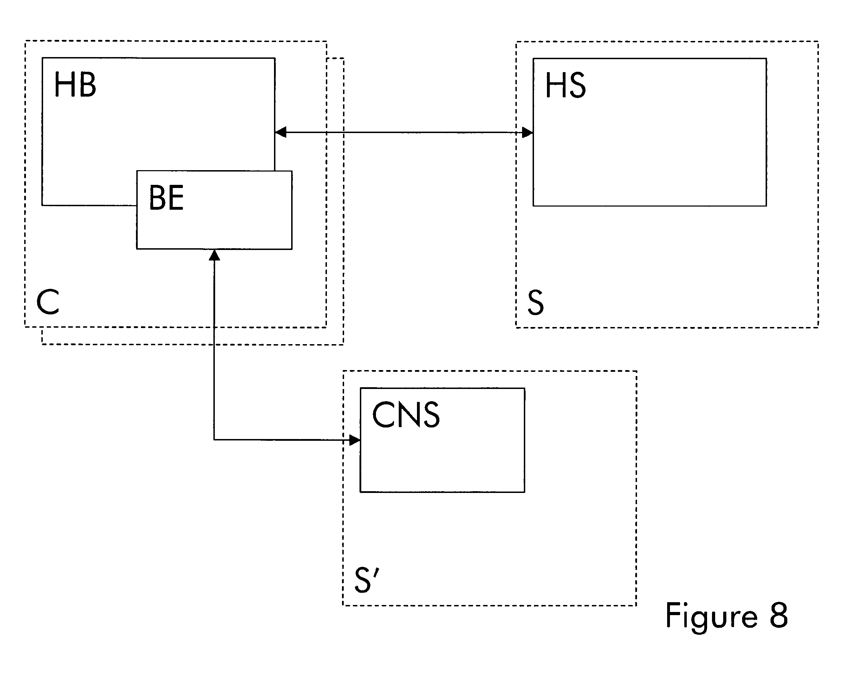

The shared pointer could also be implemented as a Web service according to the architecture shown in figure 8.

The two architectural alternatives for constructing shared systems are the centralized, where the shared application is maintained in one physical location, and replicated approach, where the shared application is copied to each collaborator. In both a conference agent is interposed between applications and the presentation system. In the centralized approach a central conference agent meditates the (all) presentation(s). The central agent receives all user input and merges the events so that a single instance of the shared application receives a single stream of events. The central agent then distributes view updates to the participants' presentation systems.

An example is **Wscrawl** of Brian Wilson, a public domain group drawing program that runs on X window system, see e.g. http://www.faqs.org/faqs/x-faq/part6/section-4.html. The single WScrawl program acts as the central agent that decides what to do with user events and where to display the output. In WScrawl the participant process is simply the X window server.

The advantage of that approach is that synchronization is easy, as state information is consistent since it is all located in one place. The disadvantages are that the complete system is now vulnerable to the failure of the central agent and it could be a network bottleneck, as all activity must be channeled through it.

At the other side is the replicated architecture each participant has a copy of the application and user inputs are distributed to each copy. One component of a central agent here is an event broadcaster whose job is to multiplex an input event from any participating collaborator to every other collaborator. For example, if one collaborator moves a scrollbar, all participants see their corresponding copy of the scrollbar move, because every collaborator invokes events to the system and those events along with the feedback that the events create are seen by all collaborators.

Replication's key advantages is the performance. A replicated architecture is also more versatile than a centralized one and the system is more robust in case of network and machine failure. On the other hand, the replication architecture requires that all replicas of the application be synchronized all the time.

Both clean approaches are suitable for joint navigation although a hybrid approach is advantageous. The corresponding architecture is shown in figure 8. Figure 8 shows a client(s) C comprising a hypermedia browser HB with a browser extension BE. A hypermedia server HS provides the hypermedia resource at a server S for the hypermedia browser HB. The hypermedia browser HB presents the hypermedia at the client C. Interactions with the hypermedia, e.g. navigation, selection, typing etc. are handled by the hypermedia browser HB within its context. These interactions correspond to interaction events. Shared interaction events are communicated to a coordinating network server CNS hosted on a extra server S'. The coordinating network server CNS derives a coordinated interaction stream for the (each) client C. It is a central agent only for synchronization and for mediating conflicting user requests. The browser extension BE might then interpret and emulate the interaction events of the client's coordinated interaction stream. For this purpose it can investigate the current presentation view of the hypermedia (objects in focus) and can context-dependently stimulate behavior by instructing the hypermedia browser appropriately.

R. Strom et al. "Concurrency Control and View Notification Algorithms for Collaborative Replicated Objects" describes algorithms for implementing a high-level programming model for synchronous distributed groupware applications. In this model, several application data objects may be updated, and these objects maintain consistency with their replicas. Changes to these objects may be optimistically or pessimistically observed by view objects by taking consistent snapshots. The shown algorithms especially provide a concurrency control, i.e. the aforementioned coordination.

For implementation the browser extension, especially the one for rendering drawing and event handling, it is advantageous to use plug-in technology. For example the application programmer interface of the Netscape Navigator could be found at http://developer.netscape.com/docs/manuals/communicator/plugin/index. htm.

Integrating gesture (designation) modality and stroke modality in the described way adds a ergonomic communication metaphor (user interface) into a collaborative hypermedia web browser in such a way that each user's presentation context, designation and control capability remains.

## Claims

1. A method for sharing a hypermedia document presentation in a browser context between at least two clients (C1, C2, C3), the method comprising the following steps
- establishing a common presentation context (SV)
- exchanging continuously interaction events between the clients within the common presentation context, and
- presenting the common presentation context,
**characterized in that** a client has its own replica of the shared presentation context within a browser and the method comprises the further steps of
- coordinating interaction events by resolving the interaction events according to preferences and
- emulating the coordinated interaction events in the replica of the shared presentation context at a client.

2. The method according to claim 1, **characterized in that** the common presentation context (SV) comprises a shared pointer (SP) on the shared presentation context such that the shared pointer is controlled by the designation means of a determined client and provides the default navigation metaphor.

3. The method according to claim 2, **characterized in that** the shared pointer (SP) replaces the pointer of the client in the presentation context and the determined client is determined by a control handover.

4. The method according to claim 1, **characterized by** further providing additional communication modalities like messaging or voice communication supporting a joint navigation.

5. A hypermedia browser (HM) comprising an extension that is adapted to establish a common presentation context (SV) with at least a second browser by exchanging continuously interaction events within the common presentation context, and presenting the common presentation context, **characterized in that** the hypermedia browser comprises storage means for its own replica of the shared presentation context and the extension (BE) is adapted to coordinate interaction events by resolving the interaction events according to preferences and emulating the coordinated interaction events in the replica of the shared presentation context.

6. The hypermedia browser (HM) according to claim 5, **characterized in that** the common presentation context (SV) comprises a shared pointer (SP) on the shared presentation context (SV) such that the shared pointer is controlled by the designation means of a determined client and provides the default navigation metaphor.

7. A network client (C, C1, C2, C3) comprising a browser, **characterized in that** the browser is a hypermedia browser according to claim 5.

8. A network server (S') comprising distributing means for exchanging messages, presence, and other structured information in close to real time between entities between clients for a common presentation context (SV), **characterized in that** a client has its own replica of the shared presentation context within a browser and the distributing means are adapted to exchange and coordinate interaction events between the clients by resolving the interaction events according to preferences.

9. A computer software product comprising programming means to perform the method according to claim 1.

10. The computer program product according to claim 9, **characterized in that** it comprises a plug-in (BE) for a browser.
